# NEUE EUROPÄISCHE PATENTSCHRIFT

(11) **EP 1 502 532 B2**
(45) Veröffentlichungstag und Bekanntmachung des Hinweises auf die Entscheidung über den Einspruch: **28.12.2011**
(45) Hinweis auf die Patenterteilung: 19.09.2007
(21) Anmeldenummer: 04017548.1
(22) Anmeldetag: 23.07.2004
(51) Int. Cl.: A47J 31/54

(54) **Boiler für einen Heissgetränkezubereiter, insbesondere Kaffeemaschine**
Boiler for a hot beverage preparing machine, especially coffee maker
Chauffe-eau pour un appareil de préparation de boissons chaudes, en particulier machine à café

(30) Priorität: 29.07.2003 DE 10334527
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser

(56) Entgegenhaltungen:
- EP-A- 0 262 273
- EP-A- 0 467 480
- DE-A- 2 104 437
- DE-U1- 20 218 338
- GB-A- 2 215 169

## Beschreibung

Die Erfindung bezieht sich auf einen Boiler für einen Heißgetränkezubereiter, insbesondere eine Kaffeemaschine, mit einem im wesentlichen zylindrischen, aufrecht stehenden Gehäuse und einer im Innem des Gehäuses im wesentlichen koaxial zur Hochachse des Gehäuses angeordneten mehrstufigen Heizwendel, wobei im unteren Bereich des Gehäuses ein Wasserzulauf und im oberen Bereich des Gehäuses ein Wasserablauf vorgesehen ist, und wobei die einzelnen, übereinander angeordneten Stufen der Heizwendel unterschiedliche Durchmesser aufweisen.

Heißgetränkezubereiter mit solchen Boilern sind bereits bekannt. Das Wasser wird aus einem Kaltwasserreservoir mittels einer Pumpe in den unteren Zulauf des Boilers eingeführt und auch über die Pumpe aus dem oberen Auslauf des Boilers herausgedrückt. Bei einer Kaffeemaschine gelangt das heiße Wasser aus dem Wasserauslauf des Boilers dann zu einer Filterkammer, und von dort entweder in eine Tasse oder eine Kanne.

Ein Boiler für diesen Einsatzzweck ist beispielsweise aus dem deutschen Gebrauchsmuster 20218338 bekannt. Dort wird das Wasser nach dem Zulauf über eine Strömungsverteilerplatte in die Randbezirke des Boilers geführt und streicht entlang der Boilerwand nach oben. Der Wasserzulauf erfolgt radial, wobei durch Umlenkrippen am Boden des Boilers das einströmende Wasser in eine kreisförmige Strömungsbahn umgelenkt wird, damit eine Durchmischung des im oberen Teil befindlichen Heißwassers mit dem zugeführten Kaltwasser verzögert wird. Nachteilig an dieser Anordnung ist allerdings, dass nicht nur die Durchmischung des zugeführten Kaltwassers mit dem im oberen Teil des Boilers befindlichen Heißwasser verzögert wird, sondern dass auch die Erwärmung des zugeführten Heißwassers verzögert wird. Werden daher mehrere Portionen Kaffee schnell hintereinander von der Kaffeemaschine bezogen, so klingt die Temperatur am Wasserauslauf dennoch merklich ab.

Ein gattungsgemäßer Boiler für eine Kaffeemaschine mit einem spiralförmig ausgebildeten Heizelement ist aus der EP 262 273 A1 bekannt. Weiter ist in der EP 467 480 A1 ein Boiler mit innenliegenden Anschlussrohren beschrieben.

Aufgabe der Erfindung ist es daher, bei einer einfachen konstruktiven Gestaltung des Boilers diesen soweit zu verbessern, dass eine möglichst gleichmäßige und schnelle Erwärmung des zuströmenden Kaltwassers ermöglicht wird.

Diese Aufgabe wird erfindungsgemäß dadurch gelöst, dass mindestens eine Stufe der Heizwendel zumindest an einer Stelle das Gehäuse des Boilers berührt.

Durch diese Lösung wird ist es möglich, auf der Außenseite des Gehäuses einen selbsttätig rückstellenden Schutztemperaturbegrenzer, d.h. einen Temperaturfühler, anzubringen, der bei Überhitzung des Boilers die Stromzufuhr abschaltet. Solange sich Wasser im Boiler befindet, wird die Temperatur stets unterhalb eines bestimmten Temperatumiveaus liegen. Sinkt jedoch der Wasserspiegel unter die Stelle, an der die Heizwendel die Gehäusewand berührt, steigt die Temperatur schlagartig an. Die mehrstufige Heizwendel ermöglicht, dass das kalt einströmende Wasser großflächig mit den heißen Außenflächen der Heizwendel in Berührung gelangt. Hierdurch wird eine gleichmäßige Erwärmung erreicht, die Temperaturspitzen vermeidet und dadurch eine Durchmischung des zulaufenden kalten Wassers mit dem bereits aufgewärmten heißen Wasser weitestgehend vermeidet.

Das Gehäuse des Boilers besteht aus Metall, wobei die Heizwendel an der Stelle mit dem Gehäuse vorzugsweise stoffschlüssig verbunden ist. Dadurch kann ohne nennenswerte Zeitverzögerung die Stromzufuhr abgeschaltet werden.

Besonders bevorzugt wird, wenn der Durchmesser der einzelnen Stufen der Heizwendel vom Zulauf in Richtung Ablauf zunimmt, derart, dass zwischen Gehäusewand und Heizwendel ein umlaufender konvergierender Spalt gebildet ist. Das bedeutet, dass das an der Boilerwand nach oben nachströmende Wasser in den konvergierenden Spalt zwischen Boilerwand und Heizwendel einströmt. Diesen konvergierenden Spalt verlassen kann das Wasser nur dadurch, dass es durch die Zwischenräume der einzelnen Stufen der Heizwendel hindurchtritt und nach innen strömt. Auf diese Weise wird eine Querströmung erreicht, die Temperaturspitzen vermeidet, und die zugleich für eine stabile Temperaturschichtung innerhalb des Boilers sorgt.

Als vorteilhaft hat sich herausgestellt, wenn der Durchmesser der untersten Stufe etwa das 0,8-fache des Durchmessers der obersten Stufe beträgt.

Besonders bevorzugt wird, wenn zwischen Zulauf und Heizwendel eine Strömungsverteilerplatte angeordnet ist, die sich im wesentlichen über den gesamten Querschnitt des Gehäuses erstreckt. Dadurch kann das Wasser auch zentral zugeleitet werden, wobei es durch die Strömungsverteilerplatte in den randnahen Bereich des Boilergehäuses geleitet wird. In diesem Zusammenhang ist es günstig, wenn die Strömungsverteilerplatte mit auf einem Kreisring angeordneten Durchtrittslöchem ausgebildet ist. Diese Durchtrittslöcher können so angeordnet sein, dass das einströmende kalte Wasser entlang den der Gehäuseinnenwand des Boilers zugewandten Flächen der Heizwendel strömt.

Besonders bevorzugt wird, wenn die Durchtrittslöcher Leitbleche aufweisen, die einen tangentialen Strömungsdurchtritt erlauben. Dadurch wird das einströmende kalte Wasser in einen Drall versetzt, der zu einer kreisringförmigen Strömung führt, die eine besonders lange Kontaktzeit mit den Heizwendeln sicherstellt. Auf diese Weise erreicht das einströmende kalte Wasser nach Passieren der Heizwendel ein Temperaturniveau, welches bereits dem im oberen Bereich des Boilers herrschenden Temperaturniveau entspricht. Hierdurch wird eine saubere und stabile Temperaturschichtung erreicht, ohne dass es zu nennenswerten Durchmischungseffekten kommt.

Wenngleich Kunststoff aufgrund seiner geringen Wärmebeständigkeit insbesondere dann problematisch sein kann, wenn die Heizwendel das Innere des Boilers aufheizt, wenn sich in diesem kein Wasser befindet, sorgt die aus Metallblech bestehende Strömungsverteilungsplatte dazu, dass in einem solchen Fall die von der Heizwendel erzeugte Strahlungwärme von dem Kunststoffboden abgeschirmt wird.

Günstigerweise kann die Strömungsverteilerplatte sich am Innenrand des Boilergehäuses abstützen und der Kunststoffboden vollflächig gegenüber der Strahlung der Heizwendel abgeschirmt sein. Dadurch wird der Kunststoffboden auch im Randbereich vollständig gegenüber der Strahlungswärme abgeschirmt.

Gemäß einer Weiterbildung der Erfindung ist an der Außenseite des Gehäuses ein Thermofühler als selbsttätig rücktstellender Schutztemperaturbegrenzer angebracht, und zwar vorzugweise an der Stelle, an der die Heizwendel das Gehäuse berührt. Wie bereits oben erwähnt, wird dadurch ein besonders schnelles Ansprechen des Schutztemperaturbegrenzer ermöglicht, ohne dass dieser im Innern des Boilers angebracht sein muß.

Besonders vorteilhaft ist auch, dass etwa auf gleicher Höhe wie der Schutztemperaturbegrenzer ein Thermofühler angebracht ist, wobei beide Elemente über ein gemeinsames Spannband, welches den Außenumfang des Gehäuses umgibt, gehalten sind.

Der Thermofühler kann auf einfache Weise durch einen Durchbruch im Gehäuse eingesetzt und über einen O-Ring abgedichtet sein, in dem der Thermofühler den O-Ring durch den über das Spannband ausgeübten Druck in dichtende Anlage mit der Gehäusewand drückt. Auf diese Weise ist die Montage des Boilers denkbar einfach gegenüber herkömmlichen Methoden, bei denen die einzelnen Temperaturelemente mittels Schraubflansche oder getrennten Spannbändern angebracht werden.

Im Folgenden werden Ausführungsbeispiele der Erfindung anhand einer Zeichnung näher erläutert.

Es zeigen:
- Fig. 1: ein erstes Ausführungsbeispiel eines erfindungsgemäßen Boilers in einer perspektivischen Außenansicht;
- Fig. 2: den Boiler aus Fig. 3 in einer Querschnittsansicht;
- Fig. 3: den Boiler aus Fig. 2 in einer perspektivischen Querschnittsansicht;
- Fig. 4: ein Detail der Strömungsverteilerplatte des Boilers aus Fig. 3 und
- Fig. 5: in einer perspektivischen Ansicht eine Variante des Boilers aus Fig. 1 mit einem Kunststoffboden.

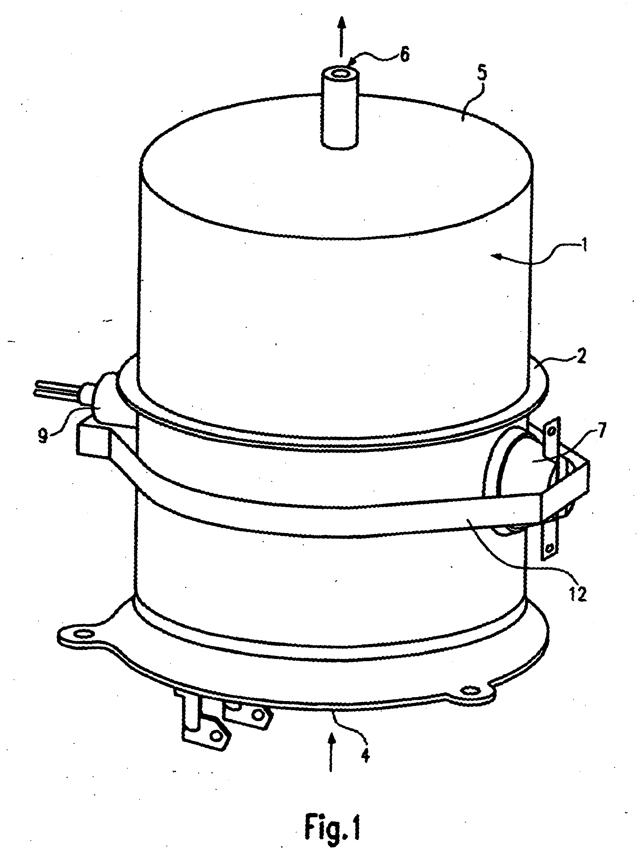

Der in den Figuren 1 bis 3 dargestellte Boiler besitzt ein Gehäuse 1 aus Blech, welches aus zwei Hälften zusammengesetzt ist, die in der Mitte über einen Bördelflansch miteinander verbunden sind.

Das Gehäuse 1 des Boilers ist im wesentlichen zylindrisch ausgebildet und mit seiner Rotationsachse senkrecht stehend ausgerichtet. Im Boden 3 des Boilers ist der Kaltwasserzulauf 4 angeordnet, während in der Decke 5 der Heißwasserablauf 6 ebenfalls mittig vorgesehen ist.

Im unteren Bereich des Gehäuses 1 ist ein erstes Temperaturelement 7 als selbsttätig rückstellender Schutztemperaturbegrenzer angeordnet, der lediglich von der Außenseite in eine Vertiefung 8 des Gehäuses 1 eingesetzt ist. Auf der diametral gegenüberliegenden Seite des Gehäuses 1 ist ein Thermofühler 9 vorgesehen, der in einen Durchbruch 10 des Gehäuses 1 eingesetzt und über einen O-Ring 11 zu dem Gehäuse hin abgedichtet ist.

Wie besser aus Fig. 1 ersichtlich ist, werden beide Temperaturelemente 7 und 9 durch ein gemeinsames Spannband 12 gehalten. Weiterer Befestigungen für die beiden Temperaturelemente 7 und 9 bedarf es nicht. Die Abdichtung des Thermofühlers 9 erfolgt dadurch, dass aufgrund des durch das Spannband 12 ausgeübten Drucks der Thermofühler 9 den O-Ring 11 gegen die den Durchbruch 10 umgebende Gehäusewand 1 drückt und damit die Verbindung abdichtet.

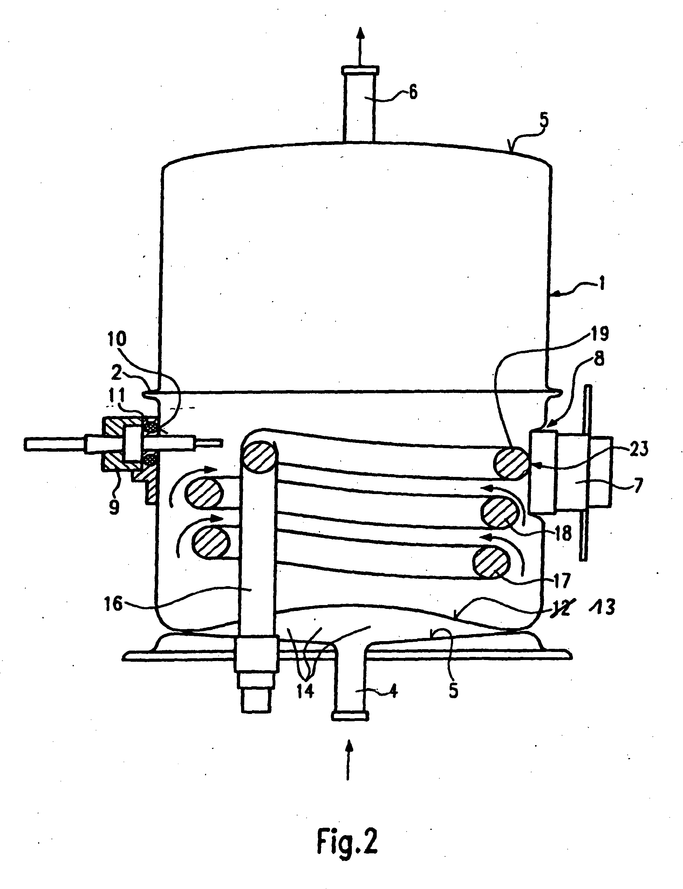

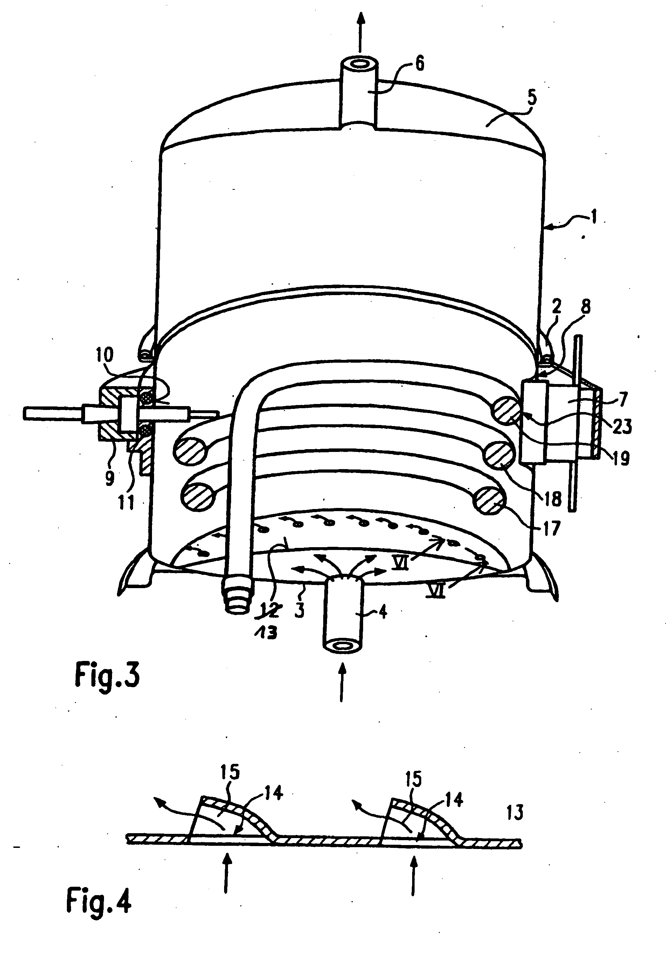

Wie besonders aus den Figuren 2 und 3 ersichtlich ist, ist im Bereich des Bodens 3 oberhalb des Kaltwasserzulaufes 4 eine Strömungsverteilerplatte 13 angeordnet. Diese Strömungsverteilerplatte ist gewölbt und erstreckt sich über den gesamten Querschnitt des Boilers. Am Außenumfangsbereich der Strömungsverteilerplatte 13 sind Löcher 14 vorgesehen, durch die das durch den Kaltwasserzulauf 4 in den Boiler eindringende Wasser verteilt wird. Wie besser aus Figur 4 ersichtlich ist, sind die Löcher in der aus einem Metallblech bestehenden Strömungsverteilerplatte 13 durch einfache Ausstanzungen gebildet, wobei das Material lediglich geschlitzt und aus der Ebene der Verteilerplatte herausgedrückt wird, so dass Leitbleche 15 entstehen, die für einen tangentialen Strömungsaustritt des Wassers aus der Strömungsverteilerplatte 13 sorgen.

Oberhalb der Strömungsverteilerplatte ist eine mehrstufige Heizwendel 16 vorgesehen, welche bei den hier dargestellten Ausführungsbeispielen über drei Stufen 17, 18 und 19 verfügt. Wie insbesondere aus den Figuren 2 und 3 erkennbar ist, nimmt der Durchmesser der einzelnen Stufen von unten nach oben zu. Der Durchmesser der untersten Stufe beträgt dabei etwa das 0,8-fache der obersten Stufe. Ferner ist erkennbar, dass die oberste Stufe 19 im Bereich des Überhitzungsschutzsensors 7 das Gehäuse 1 berührt und an dieser Stelle mit dem Gehäuse stoffschlüssig verbunden ist, beispielsweise durch Hartlöten.

Ferner ist zu erkennen, dass aufgrund der unterschiedlichen Durchmesser der einzelnen Stufen 17 bis 19 zwischen der Gehäusewand und der Heizwendel 16 ein konvergierender Spalt erzeugt wird.

Dieser konvergierende Spalt sorgt dafür, dass das durch die Löcher 14 eintretende Wasser, welches sich auf einer Kreisbahn zwischen der Heizwendel und der Gehäusewand bewegt, in Form einer radialen Querströmung die Heizwendel passiert und in das Innere der Heizwendel gelangt. Durch diese Querströmung wird vermieden, dass vereinzelte überhitzte Strömungen nach oben gelangen, um auf diese Weise eine Durchwirbelung zu verursachen. Die erfindungsgemäße Anordnung hingegen sorgt dafür, dass eine saubere und gleichmäßige Temperaturschichtung erfolgt.

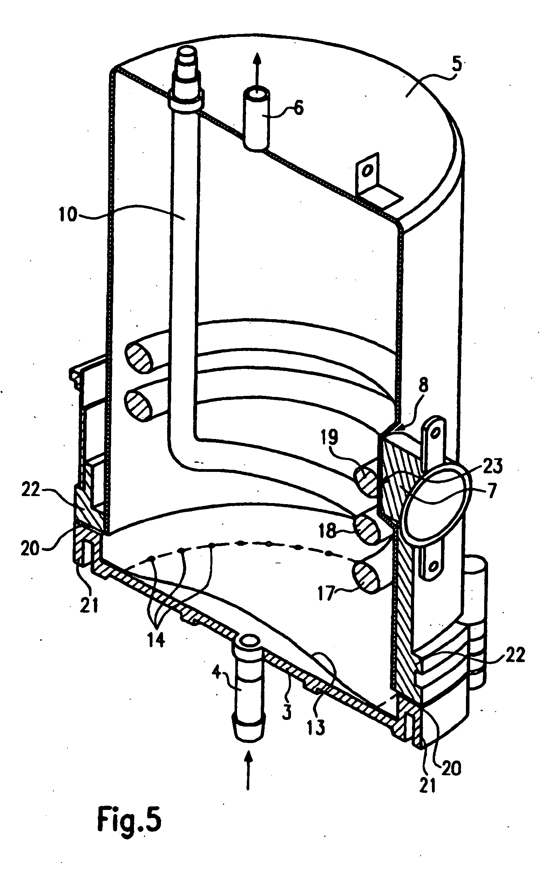

In der Figur 5 ist eine Variante zu dem oben dargestellten Ausführungsbeispiel beschrieben. Soweit im folgenden nicht auf konstruktive Änderungen eingegangen wird, unterscheidet sich diese Variante von der zuvor beschriebenen Variante nicht.

Im Gegensatz zu der ersten Variante ist der Boden 3 des zweiten Ausführungsbeispiels nicht aus Blech, sondern aus Kunststoff gebildet. Das Boilergehäuse 1 besteht ebenfalls aus Blech und ist mit der Strömungsverteilerplatte 13, die in diesem Ausführungsbeispiel auch aus Blech besteht, im Bereich des Bodens 3 verflanscht. Der Flansch 20 wird durch den Rand 21 des Bodens 3 sowie einem darüber angeordneten Kunststoffring 22 gehalten. Die Strömungsverteilerplatte 13 erstreckt sich über den gesamten Bereich des Kunststoffbodens 3 einschließlich Rand 21 und stützt sich an diesem Rand 21 ab. Dadurch wird der gesamte Kunststoffboden 3 von der direkten Wärmestrahlung der Heizwendel komplett abgeschirmt. Die Strömungsverteilerplatte 13 schützt den Kunststoffboden vorrangig bei Trockengangbedingungen.

Im Gegensatz zu dem zuvor beschriebenen Ausführungsbeispiel wird die Heizwendel durch die Decke 5 und nicht dem Boden 3 hindurchgeführt.

## Patentansprüche

1. Boiler für einen Heißgetränkezubereiter, insbesondere Kaffeemaschine, mit einem im wesentlichen zylindrischen, aufrecht stehenden Gehäuse (1) und einer im Innern des Gehäuses im wesentlichen koaxial zur Hochachse des Gehäuses (1) angeordneten mehrstufigen Heizwendel, wobei das Gehäuse (1) des Boilers aus Metall besteht, im unteren Bereich des Gehäuses (1) ein Wasserzulauf (4) und im oberen Bereich des Gehäuses (1) ein Wasserablauf (6) vorgesehen ist und die einzelnen übereinander angeordneten Stufen (17, 18, 19) der Heizwendel (16) unterschiedliche Durchmesser aufweisen,
**dadurch gekennzeichnet, dass** mindestens eine Stufe (19) der Heizwendel (16) zumindest an einer Stelle (23) das Gehäuse des Boilers berührt.

2. Boiler nach Anspruch 1,
**dadurch gekennzeichnet, dass** die Heizwendel (16) an der Stelle (23) mit dem Gehäuse (1) stoffschlüssig verbunden ist.

3. Boiler nach Anspruch 1 oder 2,
**dadurch gekennzeichnet, dass** an der Außenseite des Gehäuses (1) ein Temperaturelement als selbsttätig rückstellender Schutztemperaturbegrenzer (7) angebracht ist, und zwar vorzugsweise an der Stelle (23), an der die Heizwendel (16) das Gehäuse (1) berührt.

4. Boiler nach Anspruch 3,
**dadurch gekennzeichnet, dass** etwa auf gleicher Höhe wie der selbsttätig rückstellende Schutztemperaturbegrenzer (7) ein Thermofühler (9) angebracht ist, wobei beide Temperaturelemente (7, 9) über ein gemeinsames Spannband (12), welches den Außenumfang des Gehäuses (1) umgibt, gehalten sind.

5. Boiler nach Anspruch 4,
**dadurch gekennzeichnet, dass** für den Thermofühler (9) im Gehäuse ein Durchbruch (10) vorgesehen ist, wobei der Thermofühler (9) von außen in den Durchbruch (10) eingesetzt und über einen O-Ring (11) abgedichtet ist, in dem der Thermofühler den O-Ring durch den über das Spannband (12) ausgeübten Druck in dichtende Anlage mit der Gehäusewand (1) drückt.

6. Boiler nach einem der Ansprüche 1 bis 5,
**dadurch gekennzeichnet, dass** der Durchmesser der einzelnen Stufen (17, 18, 19) der Heizwendel (16) vom Wasserzulauf (4) in Richtung Wasserablauf (6) zunimmt, derart, dass zwischen Gehäusewand (1) und Heizwendel (16) ein umlaufender, konvergierender Spalt gebildet ist.

7. Boiler nach einem der Ansprüche 1 bis 6,
**dadurch gekennzeichnet, dass** der Durchmesser der untersten Stufe (17) etwa das 0,8-fache des Durchmesser der obersten Stufe (19) beträgt.

8. Boiler nach einem der Ansprüche 1 bis 7,
**dadurch gekennzeichnet, dass** zwischen Wasserzulauf (4) und Heizwendel (16) eine Strömungsverteilerplatte (13) angeordnet ist, die sich im wesentlichen über den gesamten Querschnitt des Gehäuses (1) erstreckt.

9. Boiler nach Anspruch 8,
**dadurch gekennzeichnet, dass** die Strömungsverteilerplatte (13) mit auf einem Kreisring angeordneten Durchtrittslöchern (14) ausgebildet ist.

10. Boiler nach Anspruch 9,
**dadurch gekennzeichnet, dass** die Durchtrittslöcher (14) Leitbleche (15) aufweisen, die einen tangentialen Strömungsdurchtritt erlauben.

11. Boiler nach einem der Ansprüche 8 bis 10,
**dadurch gekennzeichnet, dass** der Boden (3) des Gehäuses (1) aus Kunststoff und die Strömungsverteilerplatte (13) aus Metallblech besteht.

12. Boiler nach einem der Ansprüche 8 bis 11,
**dadurch gekennzeichnet, dass** die Strömungsverteilerplatte (13) sich am Innenrand des Boilergehäuses (1) abstützt und den Kunststoffboden vollflächig gegenüber der Strahlung der Heizwendel (16) abschirmt.

## Claims

1. Boiler for a hot beverage maker, in particular coffee machine, with a substantially cylindrical, vertical housing (1) and with a multiple stage heating coil arranged inside the housing substantially coaxially to the vertical axis of the housing (1), wherein the housing (1) of the boiler is made of metal, in the lower section of the housing (1) a water inlet (4) and in the upper section of the housing (1) a water outlet (6) are provided and the individual stages (17, 18, 19) of the heating coil (16) arranged one above the other have different diameters, **characterised in that** at least one stage (19) of the heating coil (16) touches the housing of the boiler at least at one point (23).

2. Boiler according to claim 1, **characterised in that** the heating coil (16) is firmly bonded to the housing (1) at the point (23).

3. Boiler according to claim 1 or 2, **characterised in that** a temperature element as automatically resetting safety temperature limiter (7) is fitted to the outside of the housing (1), namely preferably at the point (23), where the heating coil (16) touches the housing (1).

4. Boiler according to claim 3, **characterised in that** a thermocouple (9) is fitted at approximately the same height as the automatically resetting safety temperature limiter (7), wherein both temperature elements (7, 9) are held by a common band clamp (12), which surrounds the outer circumference of the housing (1).

5. Boiler according to claim 4, **characterised in that** an opening (10) is provided in the housing for the thermocouple (9), wherein the thermocouple (9) is inserted from the outside into the opening (10) and is sealed by means of an O-ring (11), in which the thermocouple presses the O-ring through the pressure exerted by the band clamp (12) in sealing contact with the housing wall (1).

6. Boiler according to any one of claims 1 to 5, **characterised in that** the diameter of the individual stages (17, 18, 19) of the heating coil (16) increases from the water inlet (4) in the direction of water outlet (6), in such a way that an encircling, converging gap is formed between housing wall (1) and heating coil (16).

7. Boiler according to any one of claims 1 to 6, **characterised in that** the diameter of the lowest stage (17) is approximately 0.8 times that of the highest stage (19).

8. Boiler according to any one of claims 1 to 7, **characterised in that** a flow divider plate (13) is arranged between water inlet (4) and heating coil (16), which extends substantially over the entire cross section of the housing (1).

9. Boiler according to claim 8, **characterised in that** the flow divider plate (13) is constructed with holes (14) arranged on a circular ring.

10. Boiler according to claim 9, **characterised in that** the holes (14) have guide plates (15), which permit a tangential through-flow.

11. Boiler according to any one of claims 8 to 10, **characterised in that** the base (3) of the housing (1) is made of plastic and the flow divider plate (13) is made of sheet metal.

12. Boiler according to any one of claims 8 to 11, **characterised in that** the flow divider plate (13) is supported on the interior edge of the boiler housing (1) and shields the plastic base against the radiation of the heating coil (16) over its entire surface.

## Revendications

1. Dispositif de production d'eau chaude pour un appareil de préparation de boissons chaudes, en particulier une machine à café, comprenant un boîtier (1) vertical et globalement cylindrique et un serpentin à plusieurs niveaux disposé à l'intérieur du boîtier, globalement coaxialement par rapport à l'axe vertical du boîtier (1), étant précisé que le boîtier (1) est en métal, qu'il est prévu dans la zone inférieure du boîtier (1) une amenée d'eau (4) et dans la zone supérieure du boîtier (1) une sortie d'eau (6), et que les niveaux individuels superposés (17, 18, 19) du serpentin (16) ont des diamètres différents,
**caractérisé en ce qu'**au moins un niveau (19) du serpentin (16) touche le boîtier du dispositif de production d'eau chaude au moins à un endroit (23).

2. Dispositif de production d'eau chaude selon la revendication 1, **caractérisé en ce que** le serpentin (16) est relié d'une seule pièce au boîtier (1) à l'endroit (23).

3. Dispositif de production d'eau chaude selon la revendication 1 ou 2, **caractérisé en ce qu'**il est prévu sur le côté extérieur du boîtier (1) un élément thermique sous la forme d'un limiteur de température de protection (7) à remise à zéro automatique, de préférence à l'endroit (23) où le serpentin (16) touche le boîtier (1).

4. Dispositif de production d'eau chaude selon la revendication 3, **caractérisé en ce qu'**une sonde thermique (9) est installée à peu près à la même hauteur que le limiteur de température de protection (7) à remise à zéro automatique, les deux éléments thermiques (7, 9) étant retenus par une bande de serrage commune (12) qui entoure la circonférence extérieure du boîtier (1).

5. Dispositif de production d'eau chaude selon la revendication 4, **caractérisé en ce qu'**il est prévu dans le boîtier une ouverture (10) pour la sonde thermique (9), celle-ci étant placée dans ladite ouverture (10) de l'extérieur et étant étanche par l'intermédiaire d'un joint torique (11) grâce au fait que la sonde thermique pousse le joint torique, grâce à la pression exercée par la bande de serrage (12), pour l'appliquer de manière étanche contre la paroi de boîtier (1).

6. Dispositif de production d'eau chaude selon l'une des revendications 1 à 5, **caractérisé en ce que** le diamètre des niveaux individuels (17, 18, 19) du serpentin (16) va en augmentant de l'arrivée (4) vers la sortie d'eau (6) de telle sorte qu'un interstice périphérique convergent est formé entre la paroi de boîtier (1) et le serpentin (16).

7. Dispositif de production d'eau chaude selon l'une des revendications 1 à 6, **caractérisé en ce que** le diamètre du niveau inférieur (17) est égal à environ 0,8 fois le diamètre du niveau supérieur (19).

8. Dispositif de production d'eau chaude selon l'une des revendications 1 à 7, **caractérisé en ce qu'**il est prévu entre l'amenée d'eau (4) et le serpentin (16) une plaque de répartition d'écoulement (13) qui s'étend globalement sur toute la section transversale du boîtier (1).

9. Dispositif de production d'eau chaude selon la revendication 8, **caractérisé en ce que** la plaque de répartition d'écoulement (13) présente des trous de passage (14) disposés sur un anneau de cercle.

10. Dispositif de production d'eau chaude selon la revendication 9, **caractérisé en ce que** les trous de passage (14) présentent des déflecteurs (15) qui permettent un passage tangentiel de l'écoulement.

11. Dispositif de production d'eau chaude selon l'une des revendications 8 à 10, **caractérisé en ce que** le fond (3) du boîtier (1) est en matière plastique et la plaque de répartition d'écoulement (13) est en tôle métallique.

12. Dispositif de production d'eau chaude selon l'une des revendications 8 à 11, **caractérisé en ce que** la plaque de répartition d'écoulement (13) s'appuie contre le bord intérieur du boîtier de dispositif (1) et protège toute la surface du fond en matière plastique du rayonnement du serpentin (16).
